Europäisches Patentamt

European Patent Office

Office européen des brevets

(19)

(11) Veröffentlichungsnummer: **0 310 843**

**A1**

(12) # EUROPÄISCHE PATENTANMELDUNG

(21) Anmeldenummer: **88115280.5**

(22) Anmeldetag: **17.09.88**

(51) Int. Cl.4: **B01J 31/10 , B01J 31/08 , B01J 31/02**

(30) Priorität: **09.10.87 DE 3734138**

(43) Veröffentlichungstag der Anmeldung:
**12.04.89 Patentblatt 89/15**

(84) Benannte Vertragsstaaten:
**CH FR IT LI**

(71) Anmelder: **Scharmer, Klaus, Dr.**
**Industriestrasse**
**D-5173 Aldenhoven(DE)**

(72) Erfinder: **Scharmer, Klaus, Dr.**
**Industriestrasse**
**D-5173 Aldenhoven(DE)**

(74) Vertreter: **von Creytz, Dietrich, Dipl.-Phys.**
**Tannenweg 25**
**D-5144 Wegberg-Beeck(DE)**

(54) **Saurer Katalysator und Verfahren zum Herstellen des Katalysators.**

(57) Ein saurer Katalysator vom typ eines $H^+$-Ionen-austauschers mit katalytisch wirksamen Sulfogruppen zum Vorverestern freier Fettsäuren in natürlichen Fetten und Ölen läßt sich mit großer äußerer, porenfreier Oberfläche und mit ausschließlich an dieser Oberfläche befindlichen Sulfogruppen herstellen, wenn als Träger ein anorganisches Material mit an diesem kovalent gebundener organischer Gruppe vorgesehen wird, wobei die organische Gruppe ihrerseits als saure Katalysatorfunktion eine oder mehrere Sulfogruppen trägt.

EP 0 310 843 A1

## Saurer Katalysator und Verfahren zum Herstellen des Katalysators

Die Erfindung betrifft einen sauren Katalysator vom Typ eines $H^+$-Ionenaustauschers mit katalytisch wirksamen Säuregruppen, insbesondere Sulfogruppen, vorzugsweise zum Vorverestern freier Fettsäuren in natürlichen Fetten und Ölen. Sie betrifft ferner Verfahren zum Herstellen des sauren Katalysators.

In natürlichen Fetten und Ölen enthaltene freie Fettsäuren können unter Verwendung einwertiger Alkohole, wie Methanol oder Ethanol, mit Hilfe homogener Katalysatoren wie z. B. Mineralsäuren, vorverestert werden. Als Katalysator können auch feste Säuren vom Typ eines $H^+$-Ionenaustauschers eingesetzt werden. Hierbei werden saure Ionenaustauscher auf Basis von Polystyrol-bzw. Styrol/Divinyl-Copolymer-Harzen angewendet, welche als katalytisch aktive Gruppen Sulfonsäurereste enthalten. Je nach Art der Herstellung sind diese Harze mikro-, meso- oder makroporös. Die Sulfonsäurereste bzw. Sulfogruppen, also die eigentlich katalytischen Zentren, befinden sich an den Harzen nicht nur auf der äußeren sondern auch auf der inneren Harzoberfläche , das heißt auf der Oberfläche der Poren. Der Zugang der Reaktionsteilnehmer zu den inneren katalytischen Zentren wird daher durch das Verhältnis von Porengröße und Porenstruktur der Harze zur Größe der Moleküle der Reaktionsteilnehmer in vielen Fällen wesentlich mitbestimmt. Je größer also die Moleküle der Reaktionsteilnehmer im Verhältnis zu den Poren sind, umso weniger Reaktionsteilnehmer kommen an den an den inneren Oberflächen der Harzporen befindlichen aktiven Katalysatorzentren zur Auswirkung. Das rührt unter anderem daher, daß Diffusionsprozesse den An- und Abtransport der Reaktionspartner zu bzw. von den Katalysatorzentren verlangsamen oder gar verhindern. Das gilt in besonders hohem Maße bei Reaktionen, an denen langkettige Moleküle, wie Fettsäuren, beteiligt sind. Im Ergebnis bedeutet das, daß gegebenenfalls sehr große Teile der Kata lysatorzentren wenig oder gar nicht zur Wirkung kommen.

Der Erfindung liegt die Aufgabe zugrunde, eine sauren Katalysator zu schaffen, dessen Säuregruppen, insbesondere Sulfogruppen, sich ausschließlich an der äußeren Oberfläche eines Trägers befinden, wobei der Träger eine ähnlich große Gesamtoberfläche wie die vorgenannten porösen Harze haben soll. Die erfindungsgemäße Lösung ist für den eingangs genannten Katalysator gekennzeichnet durch eine anorganische Trägermatrix mit daran kovalent gebundener organischer Gruppe, die ihrerseits als saure Katalysatorfunktion eine oder mehrere Säuregruppen trägt.

Durch die Erfindung wird ein saurer Katalysator geschaffen, bei dem sich die Säuregruppen, insbesondere Sulfogruppen, ausschließlich an der äußeren Oberfläche eines Trägers befinden, und bei dem der Träger aus einem anorganischen Material also nicht aus Harz besteht. Da sich die Säuregruppen ausschließlich an der äußeren Matrixoberfläche befinden, kommen bei Anwendung praktisch alle aktiven Katalysatorzentren zur Auswirkung. Unerwartet ergibt sich noch ein weiterer Vorteil dadurch, daß der Träger aus einem anorganischen Material besteht, wei dadurch die Temperaturbeständigkeit, das Quellverhalten und die Beständigkeit gegenüber organischen Lösungsmitteln - im Verhältnis zu den früher verwendeten Harzen - günstig beeinflußt wird. Vorzugsweise besteht die Trägermatrix aus einem Kieselgel. Es kommt aber auch eine Trägermatrix aus einem Mischoxid der Form $SiO_x/MO_y$ infrage, wobei M ein Metall der zweiten, dritten oder vierten Hauptgruppe des Periodensystems der Elemente, vorzugsweise Magnesium, Zink, Aluminium, Titan oder Zirkon bedeutet und wobei x und y jeweils einen Wert von 1 bis 2 annehmen können.

Gemäß weiterer Erfindung besteht ein Verfahren zum Herstellen eines sauren Katalysators vorgenannter Art darin, daß zuerst die organische Gruppe an der Trägermatrix kovalent gebunden wird und daß die sauren Gruppen nachträglich eingebracht und an der organischen Gruppe gebunden werden. Alternativ besteht ein Verfahren zum Herstellen des sauren Katalysators darin, daß sich die sauren Gruppen bereits vor dem Ausbilden der kovalenten Bindung zur anorganischen Trägermatrix an der organischen Gruppe befinden. Durch die Möglichkeit der Wahl der organischen Trägermatrix, der organischen Gruppe und der sauren Gruppe besteht eine breite Variationsmöglichkeit des erfindungsgemäßen Katalysatorsystems. Bei geeigneter Kombination von Trägermatrix, organischer Gruppe und saurer Gruppe ist es möglich, mono- oder mehrfunktionale Katalysatoren mit wahlweise unterschiedlichen Aciditäten herzustellen.

Ein bevorzugtes Verfahren zum Herstellen der erfindungsgemäßen Katalysatoren besteht darin, daß auf gesondertem Wege hergestelltes Kieselgel - Trägermatrix - mit an Hydroxylgruppen reicher Oberfläche mit einem Silan, insbesondere Trialkoxi-oder Trichlorsilan, welches seinerseits die organische Gruppe enthält, kondensiert und anschließend nach bekannten Methoden sulfoniert wird. Die auf diese Weise zu erhaltenden Protonenkapazitäten betragen 0,84 Milliäquivalent pro Gramm Katalysator. Besonders stabile und acide Systeme werden erhalten, wenn die an das Silan gebunde organische Gruppe folgende Struktur hat:
-(R)-C$_6$H$_4$-X mit R = (-CH$_2$-)$_n$, n = 1,3,5;
R = -CH$_2$-CH$_2$-CH-R' mit R' = CH$_3$-, CH$_3$-CH$_2$-,
Phenyl-und X = -SO$_3$H.

Werden anstelle der Kieselgelmatrix mischoxidische Träger der oben erläuterten Form SiO$_x$/MO$_y$ verwendet, kann die katalytische Aktivität des Gesamtsystems unerwartet in vielen Fällen noch erheblich verbessert werden.

Die erfindungsgemäßen Katalysatoren eignen sich besonders gut für die Vorveresterung von geringen Spuren freier Fettsäuren in nativen Fetten und Ölen mit einwertigem Alkohol, z. B. mit Methanol oder Ethanol. Hierzu genügt es, das vorzuveresternde Öl einem Festbettreaktor zuzuführen, welcher den Katalysator enthält, das Öl vor Eintritt in den unteren Teil des Reaktors mit dem betreffenden Alkohol zu vermischen und im Durchflußverfahren durch den Reaktor zu leiten. Am Kopf des Reaktors kann dann das vorveresterte Produktgemisch abgenommen werden.

## Ansprüche

1. Saurer Katalysator vom Typ eines H$^+$-Ionenaustauschers mit katalytisch wirksamen Säuregruppen, insbesondere Sulfogruppen, vorzugsweise zum Vorverestern freier Fettsäuren in natürlichen Fetten und Ölen,
**gekennzeichnet durch**
eine anorganische Trägermatrix mit daran kovalent gebundener organischer Gruppe, die ihrerseits als saure Katalysatorfunktion eine oder mehrere Säuregruppen trägt.

2. Katalysator nach Anspruch 1,
**dadurch gekennzeichnet,**
daß sich die Säuregruppen ausschließlich an der äußeren, relativ großen Oberfläche der Trägermatrix befinden.

3. Katalysator nach Anspruch 1 oder 2,
**dadurch gekennzeichnet,**
daß als Trägermatrix ein Kieselgel vorgesehen ist.

4. Katalysator nach Anspruch 1 oder 2,
**dadurch gekennzeichnet,**
daß die Trägermatrix aus einem Mischoxid der form SiO$_x$/MO$_y$ besteht, wobei M ein Metall der zweiten, dritten oder vierten Hauptgruppe des Periodensystems, vorzugsweise Magnesium, Zink, Aluminium, Titan oder Zirkon, ist und wobei x und y einen Wert von 1 bis 2 haben.

5. Verfahren zum Herstellen eines sauren Katalysators nach einem oder mehreren der Ansprüche 1 bis 4,
**dadurch gekennzeichnet,**
daß zuerst die anorganische Gruppe an der Trägermatrix gebunden wird und daß die sauren Gruppen nachträglich eingebracht werden.

6. Verfahren zum Herstellen eines sauren Katalysators nach einem oder mehreren der Ansprüche 1 bis 4,
**dadurch gekennzeichnet,**
daß organische Gruppen eingesetzt werden, an denen sich die sauren Gruppen bereits vor dem Ausbilden der kovalenten Bindung befinden.

7. Verfahren nach Anspruch 5 oder 6,
**dadurch gekennzeichnet,**
daß die anorganische Trägermatrix, die daran kovalent zu bindende anorganische Gruppe und die an dieser zu bindenden Säuregruppen im Sinne einer Vorbestimmung der Acidität der zu bildenden mono- oder mehrfunktionalen Katalysatoren ausgewählt werden.

8. Verfahren nach einem oder mehreren der Ansprüche 5 bis 7,
**dadurch gekennzeichnet,**
daß als Trägermatrix ein auf gesondertem Wege hergestelltes Kieselgel mit an Hydroxylgruppen reicher Oberfläche eingesetzt wird.

9. Verfahren nach Anspruch 8,
**dadurch gekennzeichnet,**
daß das Kieselgel mit einem die organische Gruppe enthaltenden Silan, insbesondere Trialkoxisilan oder Trichlorsilan, kondensiert und anschließend sulfoniert wird.

10. Verfahren nach Anspruch 9,
**dadurch gekennzeichnet,**
daß die an das Silan gebundene organische Gruppe folgende Struktur hat:
-(R)-C$_6$H$_4$-X mit R = (-CH$_2$-)$_n$, n = 1,3,5;
R = -CH$_2$-CH$_2$-CH-R' mit R' = CH$_3$-, CH$_3$-CH$_2$-,
Phenyl-und X = -SO$_3$H

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 065 925 (RHONE POULENC) * Anspruch 1; Seite 3, Zeilen 9-11; Seite 4, Zeilen 5-17 * --- | 1-3,5,7 ,8 | B 01 J 31/10 B 01 J 31/08 B 01 J 31/02 |
| X | EP-A-0 028 107 (BRITISH PETROLEUM) * Ansprüche 1-8; Seite 5, Zeilen 1-28 * --- | 1-3,7-10 | |
| A | GB-A-2 188 853 (ERDOLCHEMIE GmbH) --- | | |
| A | US-A-4 661 411 (C.W. MARTIN) --- | | |
| A | US-A-4 414 146 (J.O. OLECHOWSKI) * Spalte 8, Zeilen 10-16 * ----- | | |

| | |
|---|---|
| | RECHERCHIERTE SACHGEBIETE (Int. Cl.4) |
| | B 01 J C 07 C |

Der vorliegende Recherchenbericht wurde für alle Patentansprüche erstellt

| Recherchenort | Abschlußdatum der Recherche | Prüfer |
|---|---|---|
| DEN HAAG | 12-01-1989 | THION M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes Dokument